# EUROPÄISCHE PATENTSCHRIFT

(11) **EP 1 794 449 B1**
(45) Veröffentlichungstag und Bekanntmachung des Hinweises auf die Patenterteilung: **17.08.2011**
(21) Anmeldenummer: 05786938.0
(22) Anmeldetag: 19.09.2005
(51) Int. Cl.: F03D 7/02, F03D 1/06

(54) **VERFAHREN ZUM BETREIBEN EINER VORRICHTUNG ZUM VERSTELLEN EINES BLATTEINSTELLWINKELS SOWIE EINE VERSTELLVORRICHTUNG**
METHOD FOR OPERATING A DEVICE FOR ADJUSTING A BLADE SETTING ANGLE, AND ADJUSTING DEVICE
PROCEDE POUR FAIRE FONCTIONNER UN DISPOSITIF POUR REGLER L'ANGLE DE REGLAGE D'UNE PLAQUE ET PROCEDE DE REGLAGE ASSOCIE

(30) Priorität: 23.09.2004 DE 102004046260
(43) Veröffentlichungstag der Anmeldung: 13.06.2007
(73) Patentinhaber: NORDEX Energy GmbH, 22848 Norderstedt (DE)
(72) Erfinder: NITZPON, Joachim, 20255 Hamburg (DE)
(74) Vertreter: Schildberg, Peter
(86) Internationale Anmeldenummer: PCT/EP2005/010089
(87) Internationale Veröffentlichungsnummer: WO 2006/032438

(56) Entgegenhaltungen:
- DE-A1- 10 044 262
- DE-A1- 10 140 793
- DE-C1- 19 634 059
- US-A1- 2002 047 275

## Beschreibung

Die vorliegende Erfindung betrifft ein Verfahren zum Betreiben einer Vorrichtung zum Verstellen eines Blatteinstellwinkels sowie eine Verstellvorrichtung selbst.

Größere Windenergieanlagen verfügen an den Rotoren über eine Blatteinstellwinkelregelung. Diese stellt einen Einstellwinkel des Rotorblatts zur Leistungs- und Drehzahlregelung des Rotors ein. Hierbei werden in der Regel Stellbereiche mit einer Größe von 20° bis 25° verwendet. Die sekundäre Aufgabe des Blatteinstellwinkelmechanismus besteht darin, den Rotor zum Stillstand zu bringen. Hierzu werden die Rotorblätter bis in eine sogenannte Fahnenstellung gedreht, in der kein Drehmoment mehr erzeugt wird. Hierzu ist ein Stellbereich von ungefähr 90° erforderlich.

Aus DE 101 40 793 A1 ist eine Einrichtung zum Verstellen des Rotorblatts eines Rotors einer Windkraftanlage bekannt. Hierbei ist das Rotorblatt an einer Rotornabe über ein Wälzlager verdrehbar gelagert. Das Wälzlager besitzt drei Ringe mit zwei Laufbahnen, von denen in einer ersten Ausgestaltung zwei radial äußere Ringe mit der Rotornabe und einem sogenannten rohrförmigen Extender verbunden sind und ein dritter Ring innenliegend gegenüber den äußeren Ringen läuft. Zur Verstellung des Rotorblatts bzw. des Extenders gegenüber der Rotornabe sind zwei Verstellantriebe vorgesehen, von denen einer die Winkelposition des nicht verbundenen Ringes gegenüber der Rotornabe einstellt und der zweite Antrieb die Winkelposition des Rotorblatts gegenüber dem nicht verbundenen Ring. Um das Rotorblatt in die gewünschte Winkelposition zu bringen, werden beide Antriebssysteme angesteuert, d.h., jeder der Antriebe fährt mit einer vorgegebenen Verstellrate so lange, bis die gewünschte Winkelposition für das Rotorblatt eingenommen wurde. Um bei dem Verstellen des Blatteinstellwinkels nach Möglichkeit eine gleichmäßige Schmiermittelverteilung in dem Wälzlager zu erzielen, wird vorgeschlagen, beide Verstellantriebe gegenläufig zu betreiben, bis die gewünschte Winkelposition erreicht wurde.

Die Verwendung eines Wälzlagers für das fachsprachlich auch als Pitchsystem bezeichnete System zum Verstellen der Blatteinstellwinkel besitzt den Nachteil, daß ein Losbrechmoment des Wälzlagers überwunden werden muß. Je höher die Windgeschwindigkeit ist und somit die Schlag- und Schwenkmomente von dem Rotorblatt auf das Lager, umso größer ist das erforderliche Losbrechmoment, um das Rotorblatt einzustellen. Das Losbrechmoment tritt beim Drehen aus dem Stand auf oder wenn die Vercliehgeschwindigkeit eine kritische Geschwindigkeit unterschreitet, die nahe bei Null liegt. Die kritische Verdrehgeschwindigkeit ist abhängig von der Bauform des Lagers und kann mit einem Slip-Stick-Effekt zwischen Wälzkörper und Laufbahn erklärt werden. Bei dem Slip-Stick-Effekt handelt es sich im wesentlichen um den Übergang von Haftreibung zur Rollreibung an dem Lager.

Da das Losbrechmoment bei einem Wälzlager zur Verstellung des Rotorblatts baubedingt deutlich über den erforderlichen Antriebsmomenten für den Verstellvorgang selbst liegt, spielt das Losbrechmoment eine wesentliche Rolle für die Auslegung der Pitchantriebe.

Der Erfindung liegt die Aufgabe zugrunde, für ein Pitchsystem ein Verfahren zum Einstellen des Blatteinstellwinkels sowie eine Vorrichtung zum Verstellen eines Blatteinstellwinkels zu schaffen, die die Lager und die Verzahnung an der Drehverbindung wesentlich gleichmäßiger belasten, Stillstandsmarkierungen in dem Lager vermeiden oder wenigstens stark reduzieren und die mit einer geringeren Leistung für die Verstellantriebe ausgelegt werden können.

Erfindungsgemäß wird die Aufgabe durch ein Verfahren mit dem Merkmal nach Anspruch 1 sowie durch eine Vorrichtung mit dem Merkmal nach Anspruch 13 gelöst.

Bei dem erfindungsgemäßen Verfahren zum Betreiben einer Vorrichtung zum Verstellen eines Blatteinstellwinkels an einem Rotor einer Windenergieanlage wird mit zwei unabhängigen Verstellantrieben gearbeitet. Ein Lagerelement wirkt zwischen Rotorblatt und Rotornabe, so daß das Rotorblatt um seine Längsachse verdrehbar ist. Das Lagerelement besitzt einen frei drehbaren Lagerring. Das erfindungsgemäße Verfahren arbeitet mit einem ersten Antrieb, der den Lagerring in eine permanente Drehbewegung versetzt. Der Einstellwinkel des Rotorblatts wird durch Ansteuerung des zweiten Antriebs eingestellt. Im Gegensatz zu dem Ansteuerverfahren aus dem Stand der Technik, wird hier die Bewegung des Rotorblatts nicht auf zwei Antriebe verteilt, sondern die Einstellung des Winkels erfolgt durch den zweiten Antrieb, bei einem sich kontinuierlich drehenden Lagerring.

Das erfindungsgemäße Verfahren besitzt den Vorteil, daß bei einer geeigneten Drehzahl für den Lagerring keine Losbrechmomente mehr auftreten und so die erforderliche Leistung der Verstellantriebe verringert werden kann. Hinzu kommt, daß durch die kontinuierliche Drehung des Lagerrings Stillstandsmarken wirkungsvoll vermieden werden und die Verzahnung des drehbaren Lagerrings gleichmäßig über den Umfang belastet wird.

In einer bevorzugten Ausführung des Verfahrens wirkt der zweite Antrieb mit dem Lagerring zusammen und dreht zur Verstellung des Einstellwinkels in eine Richtung mit größerer oder niedrigerer Geschwindigkeit. Diese Ausgestaltung des Verfahrens besitzt den besonderen Vorteil, daß weder der erste noch der zweite Antrieb seine Drehrichtung bei der Ansteuerung des Rotorblatts ändern muß. Üblicherweise werden für die Leistungsregelung der Windenergieanlage spätestens ab dem Nenn-Leistungsbereich herkömmliche Pitchsysteme derart angesteuert, daß permanent die Drehrichtung des Antriebsmotors geändert wird. Dabei müssen die Massenträgheiten in den Antriebseinheiten überwunden und die Drehzahl durch einen Nulldurchgang geführt werden. Bei der bevorzugten Ausgestaltung der Erfindung dreht der erste Antrieb den Lagerring mit einer konstanten Geschwindigkeit. Dreht der zweite Antrieb mit der gleichen Geschwindigkeit und in entgegengesetzter Drehrichtung, bleibt die Winkelposition des Rotorblatts unverändert. Erhöht der zweite Antrieb nun die Geschwindigkeit seiner Drehbewegung, so wird der Blattwinkel in eine erste Richtung verfahren, während bei einer Verminderung der Drehgeschwindigkeit des zweiten Antriebs das Rotorblatt in die entgegengesetzte Richtung verfahren wird. Ein Wechseln der Drehrichtung bei den Antrieben ist hierbei nicht erforderlich.

Bevorzugt wird die Drehrichtung des ersten Antriebes so gewählt, dass bei einem Ausfall des zweiten Antriebes oder dessen Regelung das Rotorblatt in die Fahnenstellung verstellt wird.

In einer anderen bevorzugten Weiterbildung des erfindungsgemäßen Verfahrens wirkt der zweite Antrieb mit Rotorblatt oder Rotornabe zusammen und dreht zur Verstellung des Einstellwinkels in die eine oder die andere Drehrichtung. Bei dieser Ausgestaltung ist der zweite Antrieb an dem Rotorblatt oder der Rotornabe befestigt und wirkt mit dem jeweils anderen Bauteil des Pitchsystems zusammen. Da hierbei der zweite Antrieb nicht die von dem ersten Antrieb vorgegebene Drehgeschwindigkeit kompensieren muß, erfolgt die Verstellung des Einstellwinkels auch unter Änderung der Drehrichtung.

In einer bevorzugten Weiterbildung des erfindungsgemäßen Verfahrens erfolgt der Betrieb des ersten Antriebs erst nach Überschreiten eines Schwellwerts. Als Schwellwert für die Belastung kann vorzugsweise eine Windgeschwindigkeit und/oder eine Generatorleistung vorgesehen sein. Da das Losbrechmoment wesentlich von der Belastung des Lagers abhängt, wird der Lagerring erst in eine kontinuierliche Bewegung versetzt, wenn das Losbrechen noch leicht möglich ist, das Losbrechmoment also ausreichend klein ist.

Neben dem Einsetzen der kontinuierlichen Drehbewegung kann auch die Drehzahl für den drehbaren Lagerring abhängig von einer Belastungsgröße bestimmt werden. Auch hier bieten sich als mögliche Belastungsgrößen wieder Windgeschwindigkeit und/oder Generatorleistung an.

Aus Gründen der Energieeinsparung hat es sich als vorteilhaft erwiesen, die Drehzahl für den Lagerring mindestens so groß zu wählen, daß eine kritische Mindestgeschwindigkeit zwischen Rotor und Lagerring nicht unterschritten wird, wobei oberhalb der kritischen Mindestgeschwindigkeit kein Losbrechen an dem Lagerelement auftritt. Zum Einsparen der durch den ersten Antrieb verbrauchten Leistung wird der Lagerring mit einer Geschwindigkeit gedreht, die gerade groß genug ist, um das Auftreten eines entsprechenden Losbrechmoments zu vermeiden.

In einer bevorzugten Ausgestaltung des erfindungsgemäßen Verfahrens erfolgt an dem ersten und/oder zweiten Antrieb eine stufenlose Drehzahleinstellung. In einer bevorzugten Weiterbildung erfolgt eine Regelung des Einstellwinkels des Rotorblatts über den zweiten Antrieb. Hierzu ist ein Meßelement vorgesehen, das die Winkelposition des Rotorblatts mißt und den IstWert an die Regelung weiterleitet.

Zur Überwachung des Betriebszustandes wird die Leistungsaufnahme des ersten Antriebs überwacht. Stellt sich heraus, daß die vom ersten Antrieb aufgenommene Leistung von vorbestimmten Werten oder einem Intervall von vorbestimmten Werten abweicht, so ist dies ein Hinweis auf einen Fehler im Pitchsystem, insbesondere einen Fehler im Lagerelement.

Die erfindungsgemäße Aufgabe wird, ebenfalls durch eine Vorrichtung gelöst. Die Vorrichtung zum Verstellen eines Blatteinstellwinkels an einem Rotorblatt einer Windenergieanlage besitzt zwei Verstellantriebe und einen zwischen Rotorblatt und Rotornabe wirkendes Lagerelement, das einen frei drehbaren Lagerring besitzt. In der erfindungsgemäßen Vorrichtung sind beide Antriebe mit dem Rotorblatt oder der Rotornabe verbunden, wobei ein erster Antrieb mit dem Lagerring als Permanentantrieb und der zweite Antrieb mit der Rotornabe bzw. dem Rotorblatt zusammenwirkt. Der erste Antrieb ist also bei der erfindungsgemäßen Vorrichtung als ein Permanentantrieb ausgelegt. Der zweite Antrieb wirkt, falls er am Rotorblatt befestigt ist, mit der Rotornabe zusammen. Ist der zweite Antrieb mit der Rotornabe verbunden, so wirkt er mit dem Rotorblatt zusammen.

Üblicherweise besitzt das Rotorblatt eine rohrförmige Verlängerung, auch als Extender bezeichnet, an der das Lagerelement angebracht ist.

In einer möglichen Ausgestaltung kann der zweite Antrieb innerhalb des Rotorblatts oder innerhalb der Rotornabe angeordnet sein. Auch der erste Antrieb kann außerhalb des Rotorblatts oder außerhalb der Rotornabe angeordnet sein.

In einer bevorzugten Ausgestaltung sind erster und zweiter Antrieb an der Rotornabe befestigt, wobei der erste Antrieb außerhalb der Rotornabe befestigt ist und der zweite Antrieb innerhalb der Rotornabe befestigt ist. Der zweite Antrieb wirkt bevorzugt mit dem mit dem Extender oder dem Rotorblatt verbundenen Lagerelement zusammen.

Die Erfindung wird anhand der nachstehenden Figuren näher erläutert. Es zeigt:
- Fig. 1: das erfindungsgemäße Pitchsystem mit zwei an der Rotornabe befestigten Antrieben,
- Fig. 2: eine alternative Ausgestaltung des Pitchsystems mit zwei außenliegenden Antrieben und
- Fig. 3: eine weitere Ausgestaltung des Pitchsystems mit innenliegenden Antrieben.

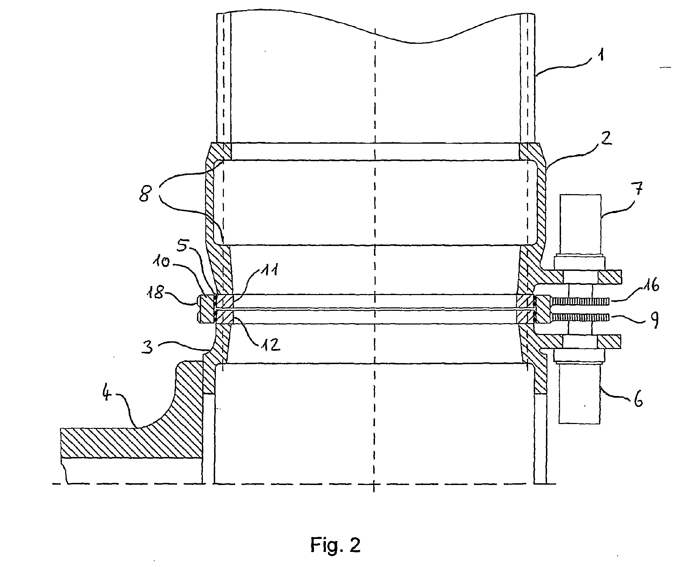

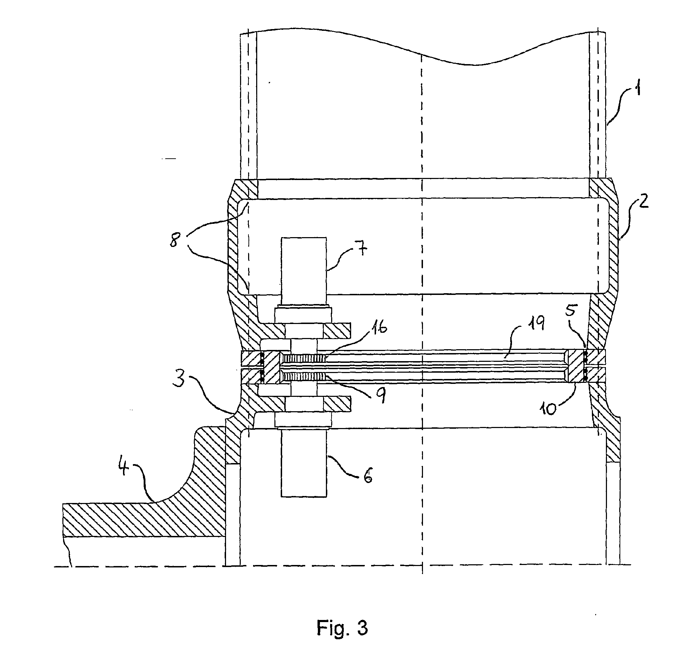

Die in Fig. 2 und 3 gezeigten Ausgestaltungen des Pitchsystems dienen zur Verdeutlichung und sind keine Ausführungsbeispiele der erfindungsgemäßen Vorrichtung.

Die für die Verstellung der Rotorblätter notwendigen Komponenten einer Windenergieanlage werden in ihrer Gesamtheit fachsprachlich als Pitchsystem bezeichnet. Entsprechend werden nachfolgend die Blattverstellantriebe als Pitchantriebe bezeichnet.

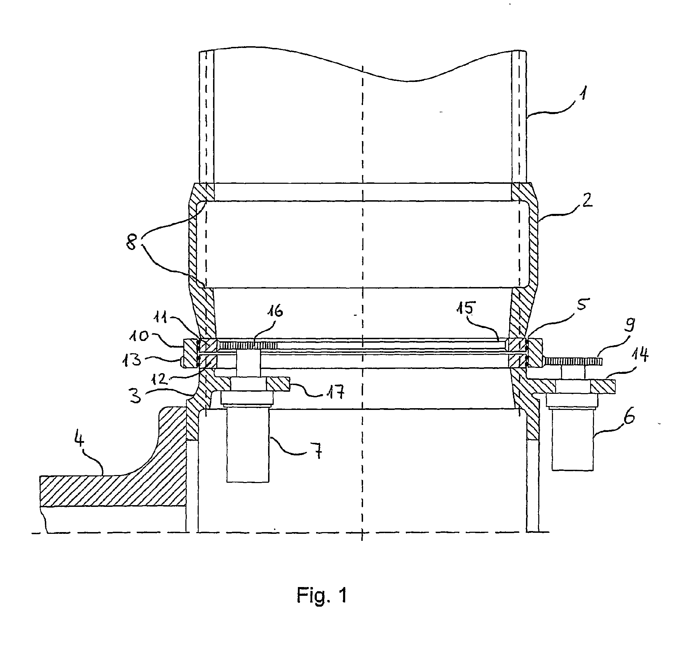

Fig. 1 zeigt ausschnittsweise ein Rotorblatt 1, das an einer rohrförmigen Verlängerung 2 (Extender) angeordnet ist. Das Rotorblatt 1 ist beispielsweise über Schrauben 8 mit dem Extender 2 verbunden. Für die Beschreibung der Erfindung wurde der Einfachheit halber der Extender als Bestandteil des Rotorblatts aufgefaßt. Rotorblatt 1 und Extender 2 sind drehbar an einer Rotornabe 3 gelagert. Die Rotornabe 3 ist mit einer Rotorwelle 4 verbunden, die die an dem Rotorblatt 1 angreifende Kraft an eine Generatoreinheit weiterleitet.

Zwischen Rotornabe 3 und Extender 2 ist ein Wälzlager 5 vorgesehen, das einen frei drehbaren Lagerring 10 besitzt. Der frei drehbare Lagerring 10 kann als Ringelement, Außenring oder Laufring bezeichnet werden. Der frei drehbare Lagerring 10 ist gegenüber den Lagerringen 11 und 12 über Wälzkörper beweglich gelagert. Die Lagerringe 11 und 12 sind jeweils, beispielsweise über eine Bolzenverbindung, mit dem Extender 2 bzw. der Rotornabe 3 verbunden. In dem dargestellten Beispiel sind zwischen Lagerring 11 und 12 und dem frei drehbaren Lagerring 10 jeweils paarweise angeordnete Wälzkörper vorgesehen.

Selbstverständlich kann hier auch jeglicher andere Aufbau für das Wälzlager gewählt werden. Beispielsweise kann der drehbare Lagerring geteilt ausgebildet sein und ein Distanzring (als Extender) zwischen den Teilen angeordnet sein.

Der frei drehbare Lagerring 10 besitzt an seiner Außenseite eine Zahnung 13, in der ein Ritzel 9 des ersten Antriebs 6 kämmt. Der erste Antrieb 6 ist über eine Halterung 14 drehfest an der Außenseite der Rotornabe 3 befestigt.

Der mit dem Extender 2 verbundene Lagerring 11 besitzt auf seiner Innenseite eine Zahnung 15, in der ein Ritzel 16 des zweiten Antriebs 7 kämmt. Der zweite Antrieb 7 wird über eine Halterung 17 drehfest in der Rotornabe 3 gehalten.

Die Ansteuerung des Pitchsystems gemäß Fig. 1 erfolgt derart, daß Antrieb 6 über Ritzel 9 den drehbaren Lagerring 10 in eine kontinuierliche Drehung versetzt. Die Drehgeschwindigkeit ist so groß, daß auch bei einer Drehung des Extenders 2 mit dem Rotorblatt 1 kein Losbrechmoment auftritt. Hierzu muß die Relativgeschwindigkeit zwischen Ring 11 und drehbarem Lagerring 10 auch bei einer Drehung des Extenders 2 in Drehrichtung des Lagerrings 10 eine kritische Geschwindigkeit überschreiten.

Die in Fig. 1 dargestellte Anordnung des Lagers und der Pitchantriebe unterscheidet sich von der aus DE 101 40 793 A1 bekannten Anordnung dadurch, daß ein Pitchantrieb unmittelbar mit dem zu verstellenden Rotorblatt zusammenwirkt, während die bekannten Pitchsysteme mit zwei Antrieben stets gemeinsam auf die Lagerelemente wirken.

Fign. 2 und 3 zeigen alternative Ausgestaltungen des Pitchsystems, bei denen die Antriebe gemeinsam an dem drehbaren Lagerring 10 angreifen.

In Fig. 2 ist der drehbare Lagerring 10 außerhalb der Lagerringe 11 und 12 angeordnet. Der Lagerring 10 besitzt an seiner Außenseite eine Verzahnung 18, in der die Ritzel 9 und 16 kämmen. Die Verzahnung 18 kann dabei als durchgehende Verzahnung ausgebildet sein, oder, wie in Fig. 2 angedeutet, aus zwei parallelen Zahnreihen bestehen.

Wenn die Antriebe 6 und 7 versetzt angeordnet werden, genügt eine Verzahnung mit der Breite eines Ritzels, d. h., die Ritzel 9 und 16 der beiden Antriebe 6, 7 laufen in derselben Verzahnung 18.

Im Betrieb arbeiten Antrieb 6 und 7 permanent, um den Lagerring 10 in eine Drehbewegung zu versetzen. Beide Antriebe drehen mit derselben Geschwindigkeit, vorausgesetzt, es liegt für beide Antriebe dasselbe Übersetzungsverhältnis vor, mit entgegengesetztem Drehsinn. Rotorblatt 1 wird hierdurch in seiner Winkelposition nicht verstellt. Soll die Verdrehung des Rotorblatts nun erfolgen, so dreht Antrieb 7 mit einer größeren oder geringeren Geschwindigkeit als zur Beibehaltung der Winkelposition. Hierdurch wird das Rotorblatt 1 in seiner Winkelposition verstellt.

Fig. 3 zeigt eine alternative Ausgestaltung, bei der der frei drehbare Lagerring 10 auf der Innenseite gelagert ist und an seiner Innenseite ein Paar von parallel laufenden Zähnen 19 besitzt. Wie bereits bei der Ausgestaltung zu Fig. 2 drehen Ritzel 9 und 16 permanent den frei drehbaren Lagerring 10.

## Patentansprüche

1. Verfahren zum Betreiben einer Vorrichtung zum Verstellen eines Blatteinstellwinkels an einem Rotorblatt einer Windenergieanlage, mit jeweils zwei Verstellantrieben pro Rotorblatt, einem zwischen Rotorblatt und Rotornabe wirkenden Lagerelement, das einen frei drehbaren Lagerring (10) besitzt, wobei das Verfahren die folgenden Verfahrensschritte aufweist:
- der Lagerring (10) wird von einem ersten Antrieb (6) in eine permanente Drehung versetzt und
- der Einstellwinkel des Rotorblatts wird durch einen zweiten Antrieb (7) eingestellt.

2. Verfahren nach Anspruch 1, **dadurch gekennzeichnet, daß** der zweite Antrieb (7) mit dem Lagerring (10) zusammenwirkt und zur Verstellung des Einstellwinkels mit einer größeren oder einer niedrigeren Geschwindigkeit als der erste Antrieb (6) dreht.

3. Verfahren nach Anspruch 1, **dadurch gekennzeichnet, daß** der zweite Antrieb (7) mit dem Rotorblatt oder der Rotornabe zusammenwirkt und zur Verstellung des Einstellwinkels in die eine oder andere Richtung gedreht wird.

4. Verfahren nach einem der Ansprüche 1 bis 3, **dadurch gekennzeichnet, daß** der erste Antrieb (6) erst nach Überschreiten eines vorbestimmten Schwellwerts für eine Belastung den Lagerring (10) permanent antreibt.

5. Verfahren nach Anspruch 4, **dadurch gekennzeichnet, daß** als Schwellwert für die Belastung eine Windgeschwindigkeit und/oder eine Generatorleistung vorgesehen ist.

6. Verfahren nach einem der Ansprüche 1 bis 5, **dadurch gekennzeichnet, daß** die Drehzahl für den Lagerring (10) abhängig von einer Belastungsgröße bestimmt wird.

7. Verfahren nach Anspruch 6, **dadurch gekennzeichnet, daß** als Belastungsgröße eine Windgeschwindigkeit und/oder eine Generatorleistung vorgesehen ist.

8. Verfahren nach Anspruch 6 oder 7, **dadurch gekennzeichnet, daß** die Drehzahl des Lagerrings mindestens so groß ist, daß eine kritische Mindestgeschwindigkeit zwischen Rotorblatt und Lagerring nicht unterschritten wird, wobei oberhalb der kritischen Mindestgeschwindigkeit kein Losbrechmoment an dem Lagerelement mehr auftritt.

9. Verfahren nach Anspruch 8, **dadurch gekennzeichnet, daß** die Drehzahl des Lagerrings so gewählt wird, daß möglichst ein geringer Energieverbrauch auftritt.

10. Verfahren nach einem der Ansprüche 1 bis 9, **dadurch gekennzeichnet, daß** für den ersten und/oder den zweiten Antrieb eine stufenlose Drehzahländerung erfolgt.

11. Verfahren nach einem der Ansprüche 1 bis 10, **dadurch gekennzeichnet, daß** der Einstellwinkel über den zweiten Antrieb geregelt wird.

12. Verfahren nach einem der Ansprüche 1 bis 11, **dadurch gekennzeichnet, daß** die Leistungsaufnahme des ersten Antriebs gemessen wird und zur Überwachung des Betriebszustandes ausgewertet wird.

13. Vorrichtung zur Verstellung eines Blatteinstellwinkels an einem Rotor einer Windenergieanlage, mit jeweils zwei Verstellantrieben (6, 7) pro Rotorblatt (1) und einem zwischen Rotorblatt (1) und Rotornabe (3) vorgesehenen Lagerelement, das einen frei drehbaren Lagerring (10) besitzt, **dadurch gekennzeichnet, daß**
- entweder beide Verstellantriebe (6, 7) an dem Rotorblatt (1) oder beide Verstellantriebe an der Rotornabe (3) gehalten sind, wobei ein erster Antrieb (6) den Lagerring (10) permanent antreibt und der zweite Antrieb (7) mit der Rotornabe (3) bzw. dem Rotorblatt (1) zusammenwirkt.

14. Vorrichtung nach Anspruch 13, **dadurch gekennzeichnet, daß** das Rotorblatt (1) eine rohrförmige Verlängerung (2) aufweist, die mit dem Lagerelement verbunden ist.

15. Vorrichtung nach Anspruch 13 oder 14, **dadurch gekennzeichnet, daß** der zweite Antrieb (7) innerhalb des Rotorblatts (1), der rohrförmigen Verlängerung (2) oder der Rotornabe (3) angeordnet ist.

16. Vorrichtung nach einem der Ansprüche 13 bis 15, **dadurch gekennzeichnet, daß** der erste Antrieb (6) außerhalb des Rotorblatts (1), der rohrförmigen Verlängerung (2) oder der Rotornabe (3) angeordnet ist.

17. Vorrichtung nach einem der Ansprüche 13 bis 16, **dadurch gekennzeichnet, daß** der erste Antrieb und der zweite Antrieb (6, 7) an der Rotornabe (3) befestigt sind.

18. Vorrichtung nach Anspruch 17, **dadurch gekennzeichnet, daß** der zweite Antrieb (7) mit einem mit dem Rotorblatt (1) verbundenen Lagerelement (11) zusammenwirkt.

## Claims

1. Method for operating a device to vary a blade setting angle on a rotor blade of a wind power plant, comprising two variable drives each per rotor blade, a bearing element acting between the rotor blade and rotor hub which has a freely rotatable bearing ring (10), the method comprising the following process steps:
• The bearing ring (10) is set into a permanent rotation by a first drive (6), and
• The setting angle of the rotor blade is adjusted by a second drive (7).

2. Method according to claim 1, **characterized in that** the second drive (7) interacts with the bearing ring (10) and rotates at a larger or lower speed than does the first drive (6), for a variation of the setting angle.

3. Method according to claim 1, **characterized in that** the second drive (7) interacts with the rotor blade or rotor hub and is rotated in one or the other direction, for a variation of the setting angle.

4. Method according to any one of claims 1 to 3, **characterized in that** the first drive (6) drives the bearing ring (10) permanently only after a certain threshold value for a load is exceeded.

5. Method according to claim 4, **characterized in that** a wind speed and/or a generator power is provided as a threshold value for the load.

6. Method according to any one of claims 1 to 5, **characterized in that** the speed for the bearing ring (10) is determined depending on a load magnitude.

7. Method according to claim 6, **characterized in that** a wind speed and/or a generator power is provided as a load magnitude.

8. Method according to claim 6 or 7, **characterized in that** the speed of the bearing ring is at least so large that the speed between the rotor blade and bearing ring docs not fall below a critical minimum speed, wherein a breakaway torque no longer occurs on the bearing element above the critical minimum speed.

9. Method according to claim 8, **characterized in that** the speed of the bearing ring is chosen so that the occurring energy consumption is as small as possible.

10. Method according to any one of claims 1 to 9, **characterized in that** an continuous speed variation is performed for the first and/or second drive.

11. Method according to any one of claims 1 to 10, **characterized in that** the setting angle is regulated via the second drive.

12. Method according to any one of claims 1 to 11, **characterized in that** the power consumption of the first drive is measured and is evaluated for the monitoring of the operating condition.

13. Device for varying a blade setting angle on a rotor of a wind power plant, comprising two variable drives each (6, 7) per rotor blade and a bearing element provided between the rotor blade (1) and rotor hub (3) that has a freely rotatable bearing ring (10), **characterized in that**
• either the two variable drives (6, 7) are retained on the rotor blade (1) or both variable drives are retained on the rotor hub (3), wherein a first drive (6) drives the bearing ring (10) permanently and the second drive (7) interacts with the rotor blade (1) and the rotor hub (3), respectively.

14. Device according to claim 13, **characterized in that** the rotor blade (1) has a tubular extension (2) which is joined to the bearing element.

15. Device according to claim 13 or 14, **characterized in that** the second drive (7) is disposed within the rotor blade (1), the tubular extension (2) or the rotor hub (3).

16. Device according to any one of claims 13 to 15, **characterized in that** the first drive (6) is disposed outside the rotor blade (1), the tubular extension (2) or the rotor hub (3).

17. Device according to any one of claims 13 to 16, **characterized in that** the first and second drives (6, 7) are mounted on the rotor hub (3).

18. Device according to claim 17, **characterized in that** the second drive (7) interacts with a bearing element (11) joined to the rotor blade (1).

## Revendications

1. Procédé pour faire fonctionner un dispositif pour régler un angle de réglage de pâle sur une pâle de rotor d'une centrale éolienne, comportant respectivement deux entraînements de réglage par pâle de rotor, un élément de palier opérant entre la pâle de rotor et le corps de moyeu, lequel élément de palier possède une bague de palier (10) librement rotative, le procédé comprenant les étapes de procédé suivantes :
- la bague de palier (10) est déplacée par un premier entraînement (6) dans une rotation permanente et
- l'angle de réglage de la pâle de rotor est ajustée par un second entraînement (7).

2. Procédé selon la revendication 1, **caractérisé en ce que** le second entraînement (7) coopère avec la bague de palier (10) et pivote en vue du réglage de l'angle de réglage à une vitesse supérieure ou inférieure à celle du premier entraînement (6).

3. Procédé selon la revendication 1, **caractérisé en ce que** le second entraînement (7) coopère avec la pâle de rotor ou le corps de moyeu et est pivote en vue du réglage de l'angle de réglage dans une ou l'autre direction.

4. Procédé selon une des revendications 1 à 3, **caractérisé en ce que** le premier entraînement (6) entraîne de façon permanente la bague de palier (10) seulement après dépassement d'une valeur de seuil prédéfinie.

5. Procédé selon la revendication 4, **caractérisé en ce qu'**une vitesse du vent et/ou une puissance de générateur sont prévues en tant que valeur de seuil de la charge.

6. Procédé selon une des revendications 1 à 5, **caractérisé en ce que** la vitesse de rotation de la bague de palier (10) est définie en fonction d'une grandeur de charge.

7. Procédé selon la revendication 6, **caractérisé en ce qu'**une vitesse du vent et/ou une puissance de générateur sont prévues en tant que grandeur de charge.

8. Procédé selon la revendication 6 ou 7, **caractérisé en ce que** la vitesse de rotation de la bague de palier atteint au moins un niveau tel qu'une vitesse minimale critique entre la pâle de rotor et la bague de palier n'est pas dépassée vers le bas, aucun couple initial de décollement sur l'élément de palier ne se produisant plus au-dessus de la vitesse minimale critique.

9. Procédé selon la revendication 8, **caractérisé en ce que** la vitesse de rotation de la bague de palier est sélectionnée de manière à engendrer une consommation d'énergie minimale.

10. Procédé selon une des revendications 1 à 9, **caractérisé en ce qu'**une modification continue de la vitesse de rotation a lieu pour le premier et/ou le second entraînement.

11. Procédé selon une des revendications 1 à 10, **caractérisé en ce que** l'angle de réglage est réglé via le second entraînement.

12. Procédé selon une des revendications 1 à 11, **caractérisé en ce que** la puissance à l'arbre du premier entraînement est mesurée et est évaluée à des fins de surveillance de l'état de fonctionnement.

13. Dispositif de réglage d'un angle de réglage de pâle d'un rotor de centrale éolienne, comportant respectivement deux entraînements de réglage (6, 7) par pâle de rotor (1) et un élément de palier prévu entre la pâle de rotor (1) et le corps de moyeu (3), lequel élément de palier possède une bague de palier librement rotative (10), **caractérisé en ce que**
- soit les deux entraînements de réglage (6, 7) sont maintenus sur la pâle de rotor (1) soit les deux entraînements de réglage sont maintenus sur le corps de moyeu (3), un premier entraînement (6) entraînant de façon permanente la bague de palier (10) et le second entraînement (7) coopérant avec le corps de moyeu (3) et/ou la pâle de rotor (1).

14. Dispositif selon la revendication 13, **caractérisé en ce que** la pâle de rotor (1) présente un allongement tubulaire (2) qui est relié à l'élément de palier.

15. Dispositif selon la revendication 13 ou 14, **caractérisé en ce que** le second entraînement (7) est disposé à l'intérieur de la pâle de rotor (1), de l'allongement tubulaire (2) ou du corps de moyeu (3).

16. Dispositif selon une des revendications 13 à 15, **caractérisé en ce que** le premier entraînement (6) est disposé à l'extérieur de la pâle de rotor (1), de l'allongement tubulaire (2) ou du corps de moyeu (3).

17. Dispositif selon une des revendications 13 à 16, **caractérisé en ce que** le premier entraînement et le second entraînement (6, 7) sont fixés sur le corps de moyeu (3).

18. Dispositif selon la revendication 17, **caractérisé en ce que** le second entraînement (7) coopère avec un élément de palier (11) relié à la pâle de rotor (1).
